# EUROPEAN PATENT SPECIFICATION

(11) **EP 3 914 553 B1**
(45) Date of publication and mention of the grant of the patent: **09.08.2023**
(21) Application number: 19911439.8
(22) Date of filing: 25.01.2019
(51) Int. Cl.: C01B 17/22, C01B 25/14, H01B 1/10, H01M 10/0562, H01M 10/052

(54) **SOLID ELECTROLYTE MATERIAL SYNTHESIS METHOD**
VERFAHREN ZUR SYNTHESE EINES FESTELEKTROLYTMATERIALS
PROCÉDÉ DE SYNTHÈSE DE MATÉRIAU D'ÉLECTROLYTE SOLIDE

(43) Date of publication of application: 01.12.2021
(73) Proprietor: Solid Power, Inc., Louisville, Colorado 80027 (US)
(72) Inventor: PLATT, Heather A. S., Golden, Colorado 80401 (US); FRANCISCO, Brian E., Superior, Colorado 80027 (US); CARLSON, Benjamin A., Boulder, Colorado 80302 (US); BUETTNER-GARRETT, Joshua, Arvada, Colorado 80003 (US)
(74) Representative: DehnsGermany Partnerschaft von Patentanwälten
(86) International application number: PCT/US2019/015163
(87) International publication number: WO 2020/153973

(56) References cited:
- WO-A1-2018/183365
- US-B2- 9 444 121
- US-B2- 10 116 002
- Laidong Zhou ET AL: "Supporting Information for: Solvent-Engineered Design of Argyrodite Li 6 PS 5 X (X= Cl, Br, I) Solid Electrolytes with High Ionic Conductivity", , 20 November 2018 (2018-11-20), XP055697908, Retrieved from the Internet: URL:https://pubs.acs.org/doi/suppl/10.1021 /acsenergylett.8b01997/suppl_file/nz8b0199 7_si_001.pdf [retrieved on 2020-05-25]
- DOMINIKA A. ZIOLKOWSKA ET AL: "Rapid and Economic Synthesis of a Li 7 PS 6 Solid Electrolyte from a Liquid Approach", APPLIED MATERIALS & INTERFACES, vol. 11, no. 6, 17 January 2019 (2019-01-17), pages 6015-6021, XP055696184, US ISSN: 1944-8244, DOI: 10.1021/acsami.8b19181
- KERN HO PARK ET AL: "Design Strategies, Practical Considerations, and New Solution Processes of Sulfide Solid Electrolytes for All-Solid-State Batteries", ADVANCED ENERGY MATERIALS, vol. 8, no. 18, 1 June 2018 (2018-06-01), page 1800035, XP055726860, DE ISSN: 1614-6832, DOI: 10.1002/aenm.201800035
- PARK et al.: "Design Strategies, Practical Considerations, and New Solution Processes of Sulfide Solid Electrolytes for All-Solid-State Batteries", Advanced Energy Materials, vol. 8, no. 18 23 April 2018 (2018-04-23), XP055726860, Retrieved from the Internet: URL:https://ontine)ibrary.witey.com/doi/ab s/10.1002/aenm.201800035 [retrieved on 2019-03-18]

## Description

### FIELD

The present invention relates to a method for producing a sulfide solid electrolyte material.

### BACKGROUND OF THE INVENTION

The ever-increasing number and diversity of mobile devices, the evolution of hybrid/electric automobiles, and the development of Internet-of-Things devices is driving greater need for battery technologies with improved reliability, capacity (mAh), thermal characteristics, lifetime and recharge performance. Currently, although lithium solid-state battery technologies provide improvement in safety, packaging efficiency, and enable new high-energy chemistries, further improvements are needed. Specifically, work is ongoing to improve the production capability and performance properties of solid electrolyte compositions. As the number and diversity of applications for solid state batteries increases, scalable production processes are required to meet this demand.

Solution methods are often readily scalable to production volumes, and as a result are commonly chosen methods for producing a wide range of materials. Regarding solid state electrolytes, lithium-containing sulfide solid electrolytes suitable for use in lithium solid state batteries have been prepared using solution methods. For example, mixing processes reacting Li₂S and P₂S₅ in a polar, aprotic solvent have been used to form sulfide solid electrolytes. Additionally, previous processes have indicated that different solvents can change the particle size and crystalline phase of the electrolyte produced. Sulfide electrolytes produced by existing methods include the Li₃PS₄ and Li₇P₃S₁₁ phases, and their room temperature ionic conductivities are a modest 0.12 - 0.27 mS/cm.

As stated in L. Zhou et al., "Solvent-Engineered Design of Argyrodite Li6PS5X (X = Cl, Br, I) Solid Electrolytes with High Ionic Conductivity Argyrodites," ACS Energy Lett. 2019, 4, 1, 265-270, including supporting information, Li₆PS₅X (X = Cl, Br), are considered to be one of the most promising solid-state electrolytes for solid-state batteries. The authors report on a solution-engineered, scalable approach to these materials, including the new argyrodite solid solution phase Li_{6-y}PS_{5-y}Cl_{1+y} (y = 0-0.5), that is reported to have very high ionic conductivities (up to 3.9 mS·cm⁻¹) and negligible electronic conductivities. These properties are reported to be almost the same as their analogues prepared by solid-state methods, owing to a lack of amorphous contributions and low impurity contents ranging from 3 to 10%. Electrochemical performance is demonstrated for Li₆PS₅Cl in a prototype solid-state battery and compared to that of the same solid electrolyte derived from classic ball-milling processing.

Other existing methods may combine milling processes with solution methods. The addition of a pulverization step prior to a mixing step may reduce time during the solution process step but does not shorten overall process times as the added step simply shifts time from the solution step to the milling step. Milling media may be added to a mixing step to encourage pulverization of the solid reactants and may decrease the reaction time, but this combination requires additional energy input and more expensive equipment.

### SUMMARY

The present invention provides a method for producing a sulfide solid electrolyte material as indicated in claim 1. Embodiments of the invention are the subject of the dependent claims.

### BRIEF DESCRIPTION OF DRAWINGS

The present disclosure may be understood by reference to the following detailed description taken in conjunction with the drawings briefly described below. It is noted that, for purposes of illustrative clarity, certain elements in the drawings may not be drawn to scale.
FIG. 1 is a flow chart of a process for producing a solid electrolyte composition, according to the principles of the disclosure.
FIG. 2 is a plot of X-ray diffraction measurements of solid electrolyte compositions produced by the process indicated in FIG. 1, according to the principles of the disclosure.
FIG. 3 is a schematic sectional view of an example construction of a lithium solid-state electrochemical cell including a solid electrode composition, according to the principles of the disclosure.

### DETAILED DESCRIPTION OF ILLUSTRATED EMBODIMENTS

In the following description, specific details are provided to impart a thorough understanding of the various embodiments of the invention. Upon having read and understood the specification, claims and drawings hereof, however, those skilled in the art will understand that some embodiments of the invention may be practiced without hewing to some of the specific details set forth herein. Moreover, to avoid obscuring the invention, some well-known methods, processes, devices, and systems finding application in the various embodiments described herein are not disclosed in detail.

Disadvantageously, existing methods may require multi-day mixing time, are generally not scalable, and may result in low performing electrolytes. Therefore faster mixing processes that leverage the versatility of different solvents to more rapidly produce scalable production volumes of electrolytes with improved performance properties, such as higher ionic conductivity, are needed. Existing methods for manufacturing solid electrolytes often utilize energy-intensive milling type processes, long reaction time and/or highly elevated temperatures to reduce the particle size of solid electrolyte precursor compounds, such as Li₂S, enough to complete the formation of the solid electrolyte phase. These processing conditions inhibit the commercial viability of certain solid electrolyte formulations and may contribute to variability of resultant performance of the electrolyte ionic conductivity and other metrics.

Described herein are novel soft chemical processes relying upon synthesis methods using multipart solvent/solution based approaches employing selective solvation and/or particle size reduction for different reactants used to form the solid electrolytes. In place of extensive milling or very long preparation time, the described methods may use simple stirring over short time periods at ambient temperature. The short time periods are possible because a solution is formed at each step of the process in contrast to typical synthesis routes that involve reactions of one or more precursors suspended in solvent. In general, ratios of certain reactants may be combined with an appropriate templating solvent to prepare the structural backbone of the desired solid electrolyte phase. Other reactants may be mixed with a second solvent to produce sub-micron species that can react rapidly with the structural backbone components. These two solutions require a very short stirring time to produce two homogenous solutions that may be mixed and stirred again to form a final homogenous mixture of the solid electrolyte solution. The solvents may be removed from the solution by a technique such as vacuum drying to form the final solid electrolyte. Advantageously, the methods described herein are readily scalable for commercial production of solid-state electrochemical cells.

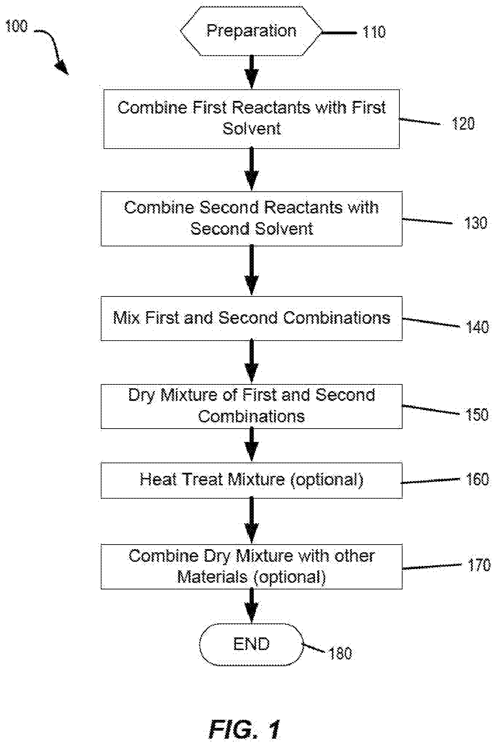

FIG. 1 is a flow chart of a process for producing a solid electrolyte composition useful for the construction of secondary electrochemical cells. Process 100 results in highly lithium-ion-conducting crystalline, glass, and glass ceramic materials useful as solid electrolytes in lithium-based solid electrochemical cells. Process 100 begins with preparation step 110 wherein any preparation action such as precursor synthesis, purification, and equipment preparation may take place. Optionally, an inert environment such as a glovebox containing argon may be used to exclude water vapor from the reaction environment.

After any initial preparation, process 100 advances to step 120 wherein selected first reactants are combined with a first solvent. First reactants may include, for example, P₂S₅, Li₂S, and other appropriate Li, P, and S sources which result in PS₄³⁻ units in a solution. It should be noted that elements B, Al, As, Sb, Bi, Si, Ge, and/or Sn may be used in place of P. Specifically, the substitution of B (or Al) may produce BS₃³⁻ (AlS₃³⁻) instead of BS₄³⁻ (AlS₄³⁻). Furthermore, the elements N, O, Se, and/or Te may be used in place of S. The first reactants are typically supplied and used in powder forms with particle sizes of 20 µm or smaller, as measured with a technique such as laser diffraction. It is also possible to use reactants made up of particles as large as 0.5mm.

First solvents may include, for example, but are not limited to hydrocarbon solvents containing one or more O, N, or S atoms. Specifically, solvents for use in step 120 may include ring (cyclic) ether molecules such as tetrahydrofuran (THF), ring ether compounds with additional groups such as 2-methyl THF, chain ether molecules such as dimethoxyethane (DME), ester molecules such as ethyl acetate, chain carbonyl containing molecules such as 2-pentanone, ring thioether compounds such as thiophene, chain nitrile molecules such as acetonitrile, and ring amine molecules such as n-methyl piperidine.

For step 120, the ratios and amounts of the various reactants are chosen to prepare the electrolyte backbone in small, readily reactive particles. In the case of a PS₄³⁻ backbone, in one embodiment, approximately 1 mole of Li₂S is used for every 1 mole of P₂S₅ to achieve the desired solution. The amount of solvent added to the combination is not limited as long as the amount of solvent supports synthesis of the desired composition of solid electrolyte reactant. Furthermore, multiple solvents may be mixed together with the noted reactants.

Similarly, in step 130 selected second reactants are combined with one or more second solvents. Second reactants may include, for example, Li₂S and LiX (X = F, Cl, Br, or I). Furthermore, reactants Li₃N, Li₂O, Li₂Se, and/or Li₂Te may be used in place of Li₂S. In one embodiment, the second reactants are supplied and used in powder form with particle sizes of 20 µm or smaller, as measured with a technique such as laser diffraction. It is also possible to use reactants made up of particles as large as 0.5mm.

Second solvents may include, but are not limited to, hydrocarbon protonated solvents encompassing chain alcohols such as ethanol, protonated ring amine molecules such as pyrrolidine, and chain protonated amide molecules such as n-methyl formamide. The typical action of the second solvent upon the second reactants is to reduce the particle size or completely dissolve the reactants. The second solvent may also be used to change the orientation of the electrolyte backbone unit prepared in the first solvent and produce different crystal structures of the same chemical composition. For example, when pyrrolidine is used as the second solvent with tetrahydrofuran as the first solvent, and the reactants are Li₂S and P₂S₅, Li₃PS₄ is the primary phase observed instead of Li₇PS₆. The solvent choice may also impact the final surface area of the resultant ceramic electrolyte powder.

For step 130, the ratios and amounts of the various reactants are not specifically limited, and may be chosen to obtain the appropriate final material stoichiometry. The amount of solvent added to the combination is not limited as long as the amount of solvent supports synthesis of the desired composition of solid electrolyte reactant. Furthermore, multiple solvents may be mixed together with the noted reactants.

The two different solutions/suspensions of steps 120 and 130 utilize the differential solubility of the various reactants and solvents to prepare the required particle sizes and ion coordination environments for the subsequent formation of the solid electrolyte compound. Specifically, polar aprotic solvents can maintain the appropriate S coordination environment around B, Al, P, As, Sb, Bi, Si, Ge, or Sn ions, while protonated solvents will react with the S and displace it. Further, sulfur-based reactants are more soluble in protonated solvents than polar aprotic solvents, so placing the appropriate sulfur-based reactants in a protonated solvent provides greater control over the final stoichiometry of the product. Therefore, the independent combinations of steps 120 and 130 provide control over solvation and ion coordination environment. For example, combining first reactants Li₂S and P₂S₅ with first solvent acetonitrile produces a solution with particles <19 µm, as measured by a particle size analysis technique such as laser diffraction. This first solution can be reacted with a second solution prepared with second reactants Li₂S and LiBr, and second solvent ethanol, to form a Li₆PS₅Br argyrodite composed of PS₄³⁻ units. Conversely, if the example first and second reactants are put together into the second solvent, no electrolyte phase is formed. These examples indicate that acetonitrile is an appropriate solvent for stabilizing a PS₄³⁻ unit, while ethanol is not. Ethanol does fully dissolve all of the example reactants. Typically, reaction/stir time for each step 120 or step 130 may be between a few minutes and a few hours. Specific reaction/stirring time depend upon the details of the reactants and solvent used including parameters such as initial powder size, total volume, and total solids loading. Example processes described below indicate various reaction/stirring time.

Next, in step 140 the first and second combinations may be mixed for a predetermined period of time and temperature in order to create a solid electrolyte solution. Mixing time is not specifically limited as long as it allows for appropriate homogenization and reaction of precursors to generate the solid electrolyte. Mixing temperature is also not specifically limited as long as it allows for appropriate mixing and is not so high that a precursor enters the gaseous state. For example, appropriate mixing may be accomplished over 0.25 to 48 hours and at temperatures from 20 to 120 degrees Celsius. Mixing may be accomplished using, for example, magnetic stirring and a closed glass vessel. Typically, reaction/stirring time for step 140 may be between a few minutes and a few hours.

Next, in step 150, the mixture resulting from step 140 may be dried by spray drying in an inert atmosphere such as argon or nitrogen or by vacuum drying under vacuum for a predetermined period of time and temperature. Typically, drying time for step 140 may be between a few minutes and a few hours at a temperature range typically of ambient temperature to 215 degrees Celsius.

Optional heat treatment, during step 160 may also be performed. For some compositions, an amorphous glassy phase is desired and no further heat treatment is necessary. For other compositions, a crystalline or glass ceramic phase is preferable, and heating to temperatures between 100 and 550 degrees Celsius may be needed. The desired crystalline or glass ceramic phase may optionally be produced during step 150. The time and temperature required will vary by material and target phase.

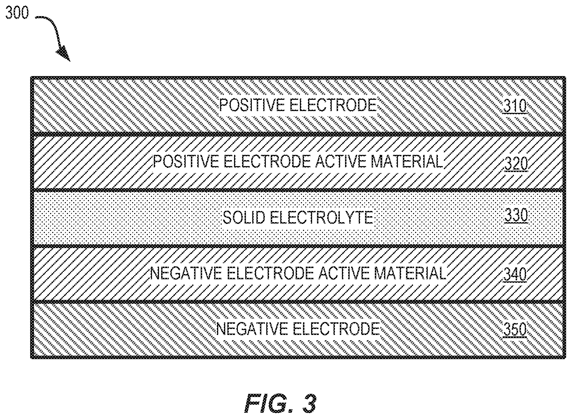

Next, in step 170, the dry mixture may be optionally combined with other materials, such as binders, required to form one or more layers of the electrochemical cell described in FIG. 3. In final step 180, a completed composition may be utilized in the construction of electrochemical cells such as the cell of FIG. 3.

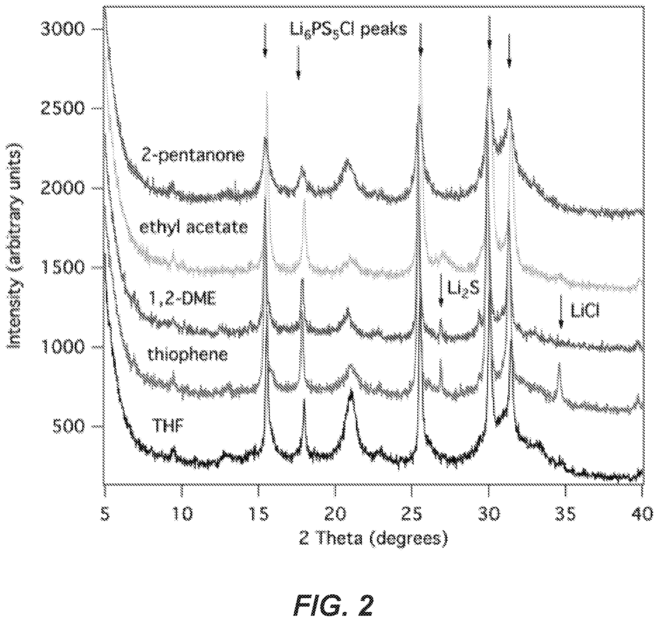

The following examples express the efficacy of the described dual solution method of process 100 for the production of a desirable Li₆PS₅Cl argyrodite crystalline phase electrolyte and other electrolyte compounds as compared to other single solution and dual mixture methods of production. Although the following examples are described using Lithium-based compounds it should be understood that Sodium-based electrolyte compounds may be substituted. Furthermore, although Li₆PS₅Cl argyrodite is described herein; it should be understood that the present method may include electrolytes with other phases with and without halogen such as compounds: Li₃PS₄, Li₇P₃S₁₁, Li₇PS₆, Li₆PS₅Cl, Li₆PS₅Cl_{0.5}Br_{0.5}, Li₆PS₅I.
Example 1 (dual solution method)
   0.195 g of P₂S₅ was mixed with 0.024 g Li₂S in 5 mL tetrahydrofuran (THF) and stirred for 3 h. 0.045 g LiCl was mixed with 0.097 g Li₂S in 5 mL ethanol and stirred for 45 min. The THF and ethanol mixtures were combined and further stirred for 15 min, and then the final mixture was drop cast at 215 °C to form a ceramic powder (see Figure 2). This process was repeated with thiophene, 1,2-dimethoxyethane (1,2-DME), ethyl acetate, or 2-pentanone substituted for THF. X-ray diffraction analysis was carried out on the powders. Li₆PS₅Cl argyrodite was the primary phase observed in all of the powders.
Example 2 (dual solution method)
   1.024 g of P₂S₅ was mixed with 0.212 g Li₂S in 25 mL acetonitrile (ACN) and stirred for 30 min. 0.393 g Li₂S was added to 25 mL ethanol and stirred for 30 min. The ACN and ethanol mixtures were combined and further stirred for 15 min, and then the final mixture was drop cast at 200 °C to form a ceramic powder. X-ray diffraction analysis was carried out on the powders. β-Li₃PS₄ was the primary phase observed.
Example 3 (dual solution method)
   0.615 g of P₂S₅ was mixed with 0.127 g Li₂S in 25 mL ethyl acetate (EA) and stirred for 30 min. The Li₂S particle size was less than 20 µm. 0.223 g LiCl was mixed with 0.478 g Li₂S in 25 mL ethanol and stirred for 30 min. The EA and ethanol mixtures were combined and further stirred for 15 min, and then the final mixture was heated at 150 °C under vacuum for 3 h to form a ceramic powder. The powder was further heated at 550 °C under flowing argon for 2h. X-ray diffraction analysis was carried out on the powders. Li₆PS₅Cl argyrodite was the primary phase observed.
   0.35 g of ceramic powder was compressed to a density of 1.4 g/cm³ in a 1.6 cm diameter die at ambient temperature, and the ionic conductivity was measured by using AC impedance. The ionic conductivity of the sample was 1.6 mS/cm.
Example 4 (dual solution method)
   0.615 g of P₂S₅ was mixed with 0.127 g Li₂S in 25 mL ethyl acetate (EA) and stirred for 5 h. The Li₂S particles were approximately 0.5 mm diameter. 0.223 g LiCl was mixed with 0.478 g Li₂S in 25 mL ethanol and stirred for 5 h. The EA and ethanol mixtures were combined and further stirred for 15 min, and then the final mixture was heated at 150 °C under vacuum for 1.5 h to form a ceramic powder. The powder was further heated at 550 °C under flowing argon for 2h. X-ray diffraction analysis was carried out on the powders. Li₆PS₅Cl argyrodite was the primary phase observed.
   0.32 g of ceramic powder was compressed to a density of 1.5 g/cm³ in a 1.6 cm diameter die at ambient temperature, and the ionic conductivity was measured by using AC impedance. The ionic conductivity of the sample was 1.3 mS/cm.
Example 5 (dual solution method)
   0.615 g of P₂S₅ was mixed with 0.127 g Li₂S in 25 mL acetonitrile (ACN) and stirred for 30 min. 0.457 g LiBr was mixed with 0.478 g Li₂S in 25 mL ethanol and stirred for 30 min. The ACN and ethanol mixtures were combined and further stirred for 15 min, and then the final mixture was heated at 150 °C under vacuum for 1.5 h to form a ceramic powder. The powder was further heated at 550 °C under flowing argon for 2h. X-ray diffraction analysis was carried out on the powders. Li₆PS₅Br argyrodite was the primary phase observed.
   0.35 g of ceramic powder was compressed to a density of 1.8 g/cm³ in a 1.6 cm diameter die at ambient temperature, and the ionic conductivity was measured by using AC impedance. The ionic conductivity of the sample was 1.1 mS/cm.
Comparative example 1 (single solution method)
   0.778 g of P₂S₅ was mixed with 0.241g Li₂S and 0.148 g LiCl in 10 mL ethanol and stirred until all solids dissolved. The mixture was dried under vacuum and then heated at 190 °C to form a ceramic powder. X-ray diffraction analysis was carried out on the powder, and LiCl was the only phase observed.
Comparative example 2 (single solution method)
   2.587 g of P₂S₅ was mixed with 1.601 g Li₂S and 0.986 g LiCl in 25 mL 1,2-dimethoxyethane and stirred for 72 h. The mixture was dried at 140 °C, then heated at 210 °C under vacuum to form a ceramic powder. X-ray diffraction analysis was carried out on the powder, and the phases Li₇P₃S₁₁, Li₂S, and LiCl were all observed.

FIG. 2 is a plot of X-ray diffraction measurements of solid electrolyte compositions produced by the process indicated in FIG. 1 according to Example 1. X-ray diffraction (XRD) measurements show dominant peaks indicative of the Li₆PS₅Cl argyrodite as the primary crystalline phase observed for all solvents used. Minor variations in the X-ray diffraction measurements were observed based upon the solvent used in the electrolyte synthesis.

FIG. 3 is a schematic sectional view of an example construction of a lithium solid-state electrochemical cell including an electrode composition of the present disclosure. Lithium solid-state battery 300 includes positive electrode (current collector) 310, positive electrode active material layer (cathode) 320, solid electrolyte layer 330, negative electrode active material layer (anode) 340, and negative electrode (current collector) 350. Solid electrolyte layer 330 may be formed between positive electrode active material layer 320 and negative electrode active material layer 340. Positive electrode 310 electrically contacts positive electrode active material layer 320, and negative electrode 350 electrically contacts negative electrode active material layer 340. The solid electrolyte compositions described herein may form portions of positive electrode active material layer 320, negative electrode active material layer 340 and solid electrolyte layer 330.

Positive electrode 310 may be formed from materials including, but not limited to, aluminum, nickel, titanium, stainless steel, or carbon. Similarly, negative electrode 350 may be formed from copper, nickel, stainless steel, or carbon. Positive electrode active material layer 320 may include, at least, a positive electrode active material including, but not limited to, metal oxides, metal phosphates, metal sulfides, sulfur, lithium sulfide, oxygen, or air, and may further include a solid electrolyte material such as the solid electrolyte compositions described herein, a conductive material and/or a binder. Examples of the conductive material include , but are not limited to, carbon (carbon black, graphite, carbon nanotubes, carbon fiber, graphene), metal particles, filaments, or other structures. Examples of the binder include, but are not limited to, polyvinyl chloride (PVC) polyanilene, poly(methyl methacrylate) ("PMMA"), nitrile butadiene rubber ("NBR"), styrene-butadiene rubber (SBR), PVDF, or polystyrene. Positive electrode active material layer 320 may include solid electrolyte compositions as described herein at, for example, 5% by volume to 80% by volume. The thickness of positive electrode active material layer 320 may be in the range of, for example, 1 µm to 1000 µm.

Negative electrode active material layer 340 may include, at least, a negative electrode active material including, but not limited to, lithium metal, lithium alloys, Si, Sn, graphitic carbon, hard carbon, and may further include a solid electrolyte material such as the solid electrolyte compositions described herein, a conductive material and/or a binder. Examples of the conductive material may include those materials used in the positive electrode material layer. Examples of the binder may include those materials used in the positive electrode material layer. Negative electrode active material layer 340 may include solid electrolyte compositions as described herein at, for example, 5% by volume to 80% by volume. The thickness of negative electrode active material layer 340 may be in the range of, for example, 1 µm to 1000 µm.

Solid electrolyte material included within solid electrolyte layer 330 may be solid electrolyte compositions as described herein. Solid electrolyte layer 330 may include solid electrolyte compositions as described herein in the range of 10% by volume to 100% by volume, for example. Further, solid electrolyte layer 330 may contain a binder or other modifiers. Examples of the binder may include those materials used in the positive electrode material layer as well as additional self-healing polymers and poly(ethylene) oxide (PEO). A thickness of solid electrolyte layer 330 may be in the range of 1 µm to 1000 µm.

Although indicated in FIG. 3 as a lamellar structure, it is well known that other shapes and configurations of solid-state electrochemical cells are possible. Generally, a lithium solid-state battery may be produced by providing a positive electrode active material layer, a solid electrolyte layer, and a negative electrode active material layer sequentially layered and pressed between electrodes and provided with a housing.

## Claims

1. A method for producing a sulfide solid electrolyte material comprising the steps of:
combining an alkali metal salt and a sulfide compound containing at least one of P, B, Al, As, Sb, Bi, Si, Ge, and Sn with a polar aprotic solvent to form a first solution;
combining an alkali metal salt and a polar protonated solvent or ethanol to form a second solution;
combining the first and second solutions to form a third solution; and
drying the third solution to produce a sulfide solid electrolyte material;
wherein the first solution has a molar ratio of Li₂S:P₂S₅ between 9:11 and 11:9.

2. The method as recited in Claim 1 further comprising combining an alkali metal halide with the alkali metal salt and the polar protonated solvent or the ethanol.

3. The method as recited in Claim 1 wherein the alkali metal salt is selected from the group consisting of Li₂S and Li₃N.

4. The method as recited in Claim 1 wherein the alkali metal salt is Li₂S with a particle size of 20 µm or smaller.

5. The method as recited in Claim 1 further comprising the step of heating the sulfide solid electrolyte material to a temperature higher than the drying temperature to increase the ionic conductivity of the sulfide solid electrolyte material.

6. The method as recited in Claim 1 wherein the sulfide solid electrolyte material comprises a lithium argyrodite phase.

7. The method as recited in Claim 1 further comprising the step of stirring each of the first, second and third solutions for a period ranging between 15 minutes and 12 hours.

8. The method as recited in any of the preceding claims, wherein a Nitrogen-bearing polar aprotic solvent is used as the polar aprotic solvent and wherein the alkali metal salt is combined with the ethanol to form the second solution.

9. The method as recited in Claim 8 wherein the Nitrogen-bearing polar aprotic solvent is acetonitrile, propionitrile, isobutyronitrile, malonitrile, fumaronitrile, or a combination thereof.

## Patentansprüche

1. Verfahren zur Herstellung eines sulfidischen Festelektrolytmaterials, das die folgenden Schritte umfasst:
Kombinieren eines Alkalimetallsalzes und eines Sulfids, das mindestens eines der Elemente P, B, Al, As, Sb, Bi, Si, Ge und Sn enthält, mit einem polaren aprotischen Lösungsmittel, um eine erste Lösung zu bilden;
Kombinieren eines Alkalimetallsalzes und eines polaren protonierten Lösungsmittels oder Ethanols zur Bildung einer zweiten Lösung;
Kombinieren der ersten und zweiten Lösung zur Bildung einer dritten Lösung; und
Trocknen der dritten Lösung zur Herstellung eines sulfidischen Festelektrolytmaterials;
wobei die erste Lösung ein molares Verhältnis von Li₂S:P₂S₅ zwischen 9:11 und 11:9 aufweist.

2. Verfahren nach Anspruch 1, das ferner die Kombination eines Alkalimetallhalogenids mit dem Alkalimetallsalz und dem polaren protonierten Lösungsmittel oder dem Ethanol umfasst.

3. Verfahren nach Anspruch 1, wobei das Alkalimetallsalz ausgewählt ist aus der Gruppe bestehend aus Li₂S und Li₃N.

4. Verfahren nach Anspruch 1, wobei das Alkalimetallsalz Li₂S mit einer Teilchengröße von 20 µm oder weniger ist.

5. Verfahren nach Anspruch 1, das ferner den Schritt des Erhitzens des sulfidischen Festelektrolytmaterials auf eine höhere Temperatur als die Trocknungstemperatur umfasst, um die ionische Leitfähigkeit des sulfidischen Festelektrolytmaterials zu erhöhen.

6. Verfahren nach Anspruch 1, wobei das sulfidische Festelektrolytmaterial eine Lithium-Argyrodit-Phase umfasst.

7. Verfahren nach Anspruch 1 umfasst ferner den Schritt des Rührens jeder der ersten, zweiten und dritten Lösungen für einen Zeitraum zwischen 15 Minuten und 12 Stunden.

8. Verfahren nach einem der vorhergehenden Ansprüche, wobei ein stickstoffhaltiges polares aprotisches Lösungsmittel als polares aprotisches Lösungsmittel verwendet wird und wobei das Alkalimetallsalz mit dem Ethanol kombiniert wird, um die zweite Lösung zu bilden.

9. Verfahren nach Anspruch 8, wobei das stickstoffhaltige polare aprotische Lösungsmittel Acetonitril, Propionitril, Isobutyronitril, Malonitril, Fumaronitril oder eine Kombination davon ist.

## Revendications

1. Procédé de production d'un matériau électrolytique solide à base de sulfure, comprenant les étapes suivantes :
combiner d'un sel de métal alcalin et d'un sulfure contenant au moins un des éléments suivants : P, B, Al, As, Sb, Bi, Si, Ge et Sn, avec un solvant aprotique polaire pour former une première solution ;
combiner un sel de métal alcalin et un solvant polaire protoné ou de l'éthanol pour former une deuxième solution ;
combiner la première et la deuxième solution pour former une troisième solution ; et
sécher de la troisième solution pour produire un matériau électrolytique solide à base de sulfure ;
dans laquelle la première solution présente un rapport molaire Li₂S:P₂S₅ compris entre 9:11 et 11:9.

2. Procédé selon la revendication 1, comprenant en outre la combinaison d'un halogénure de métal alcalin avec le sel de métal alcalin et le solvant polaire protoné ou l'éthanol.

3. Procédé selon la revendication 1, dans lequel le sel de métal alcalin est choisi dans le groupe constitué par Li₂S et Li₃N.

4. Procédé selon la revendication 1, dans lequel le sel de métal alcalin est Li₂S avec une taille de particule de 20 µm ou moins.

5. Procédé selon la revendication 1, comprenant en outre l'étape consistant à chauffer le matériau d'électrolyte solide à base de sulfure à une température supérieure à la température de séchage afin d'augmenter la conductivité ionique du matériau d'électrolyte solide à base de sulfure.

6. Procédé selon la revendication 1, dans lequel le matériau électrolyte solide sulfuré comprend une phase d'argyrodite de lithium.

7. Procédé selon la revendication 1, comprenant en outre l'étape d'agitation de la première, de la deuxième et de la troisième solution pendant une période comprise entre 15 minutes et 12 heures.

8. Procédé selon quelconque des revendications précédentes, dans lequel un solvant aprotique polaire contenant de l'azote est utilisé comme solvant aprotique polaire et dans laquelle le sel de métal alcalin est combiné à l'éthanol pour former la deuxième solution.

9. Procédé selon la revendication 8, dans lequel le solvant aprotique polaire contenant de l'azote est l'acétonitrile, le propionitrile, l'isobutyronitrile, le malonitrile, le fumaronitrile, ou une combinaison de ceux-ci.
